# EUROPEAN PATENT APPLICATION

(11) **EP 3 712 470 A1**
(43) Date of publication of application: **23.09.2020**
(21) Application number: 18879787.2
(22) Date of filing: 25.09.2018
(51) Int. Cl.: F16J 15/18, F16J 15/3268

(54) **SEAL RING**

(30) Priority: 15.11.2017 JP 2017220299
(71) Applicant: NOK CORPORATION, Tokyo 105-8585 (JP)
(72) Inventor: SATO Hiroaki, Aso-shi Kumamoto 869-2231 (JP)
(74) Representative: TBK
(86) International application number: PCT/JP2018/035422
(87) International publication number: WO 2019/097845

(57) **Abstract**

A seal ring is mounted and seated in a mounting groove provided in either one of an inner peripheral member and an outer peripheral member reciprocating relative to each other and brings the seal surface into close contact with the other one to seal a fluid. The seal ring is configured by a combination of two members of an inner peripheral side ring and an outer peripheral side ring which are rubber-like elastic bodies. The hardness of one member having a seal surface of the inner peripheral side ring and the outer peripheral side ring is set to be higher than that of the other member. On the contact surface between the inner peripheral side ring and the outer peripheral side ring, a recess-projection fitting portion restricting the positional shift in the axial direction between the inner peripheral side ring and the outer peripheral side ring is provided along the annular direction.

## Description

### Technical Field

The disclosure relates to a seal ring used in order to seal a fluid between an inner peripheral member and an outer peripheral member reciprocating relative to each other.

### Background Art

Seal rings, such as an O-ring and a D-ring, are used in clutches used in the AT (Automatic Transmission) and the CVT (Continuously Variable Transmission) of automobiles. The seal ring realizes the engagement of the clutch by holding a received pressure.

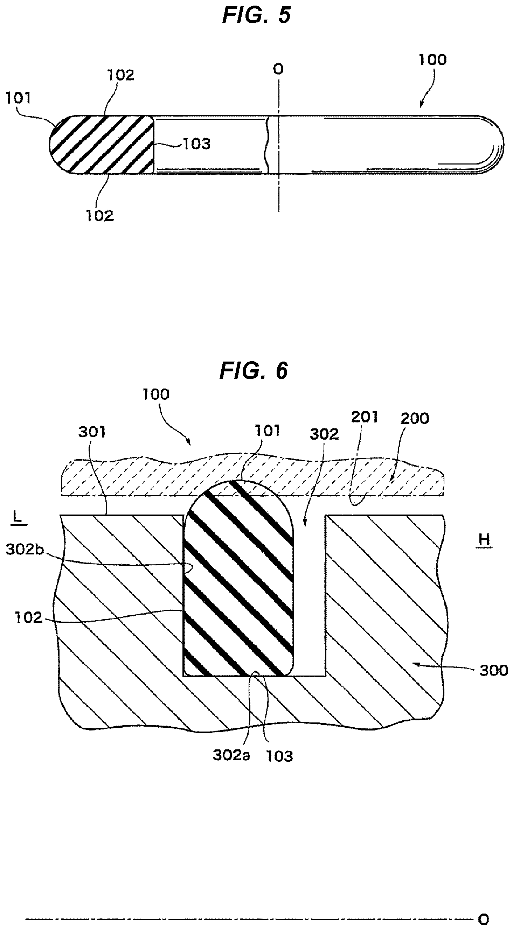

FIG. 5 illustrates an example of a seal ring described in Patent Document 1. A seal ring 100 contains a rubber-like elastic body and the shape of the cross section cut along a plane passing through an axial center O is formed into a flat D-shape (see the left half in FIG. 5). The seal ring 100 is provided with a seal surface 101 forming a circular arc-shaped cross section bulged to the outer diameter side on the outer periphery and has side surfaces 102 on both sides located on the plane orthogonal to the axial center O and a seal inner peripheral surface 103 formed into a cylindrical shape. Such a seal ring 100 is generally referred to as a "D-ring".

As illustrated in FIG. 6, the seal ring 100 is interposed between an outer peripheral member 200 and an inner peripheral member 300 of a clutch (the entire of which is not illustrated), for example, and seals a fluid flowing between the outer peripheral member 200 and the inner peripheral member 300. As an example of the structure therefor, the seal ring 100 is mounted in a mounting groove 302 formed into an annular shape in an outer peripheral surface 301 of the inner peripheral member 300 with a gap and the seal surface 101 is projected to the outer diameter side from the mounting groove 302. The seal surface 101 closely contacts an inner peripheral surface 201 of the outer peripheral member 200 in a slidable manner.

The seal ring 100 is fitted into the mounting groove 302 to seat a seal inner peripheral surface 103 on a groove bottom surface 302a, and then receives the pressure of a hydraulic oil sealed to the side of a high-pressure space H to thereby bring one of the side surfaces 102 into close contact with an internal surface 302b of the mounting groove 302. The seal surface 101 forms a circular arc-shaped cross section to thereby locally increase the seal surface pressure to the inner peripheral surface 201 of the outer peripheral member 200 to prevent the leakage of the hydraulic oil to a low-pressure space L from the high-pressure space H.

### Prior Art Document

### Patent Documents

Patent Document 1: Japanese Unexamined Patent Application Publication No. 2011-163438
Patent Document 2: Japanese Unexamined Patent Application Publication No. 11-336908

### Summary

### Problem to be Solved

In recent years, an improvement of fuel consumption and a reduction in energy loss have been demanded with the shift to a low carbon society as the background. Also in the fields of the AT and the CVT, a request for reducing the sliding resistance when the seal ring slides has increased.

As a technique of reducing the sliding resistance of the seal ring, measures of reducing a crushing margin or using a low-hardness rubber material have been taken. However, when a technique of reducing the crushing margin is adopted, the initial sealability has decreased or the seal performance has easily deteriorated by prolonged use. When a technique of using a low-hardness rubber material is adopted, the durability decreases.

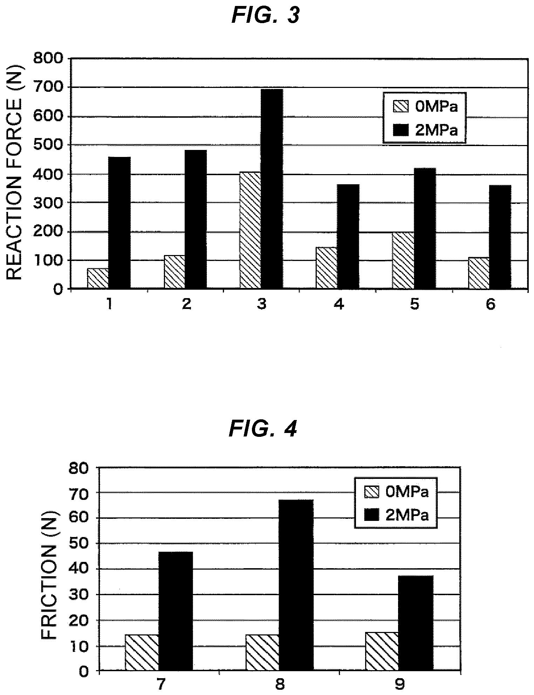

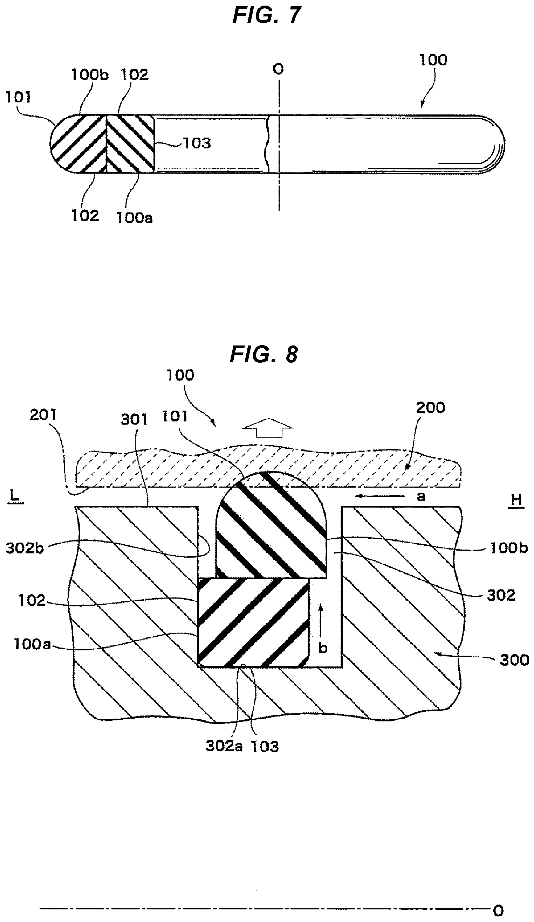

In this point, Patent Document 2 discloses a seal ring 100 in which two kinds of members different in the hardness are combined (see FIG. 4 of Patent Document 2). The seal ring 100 is configured by an inner peripheral side ring 100a seated in a mounting groove 302 of an inner peripheral member 300 and an outer peripheral side ring 100b disposed on the outer peripheral surface of the inner peripheral side ring 100a to bring a seal surface 101 into contact with an inner peripheral surface 201 of an outer peripheral member 200 as illustrated in FIG. 7. The inner peripheral side ring 100a is a low hardness portion containing a low hardness rubber material. The outer peripheral side ring 100b is a high hardness portion containing a high hardness rubber material.

The seal ring 100 in which such two kinds of members different in the hardness are combined can reduce the sliding resistance when the seal ring 100 slides without reducing the crushing margin of the outer peripheral side ring 100b having the seal surface 101 and without using the low hardness rubber material for the outer peripheral side ring 100b.

However, as illustrated in FIG. 8, in the seal ring 100 described in Patent Document 2, a positional shift may occur between the inner peripheral side ring 100a and the outer peripheral side ring 100b due to the assembled state or the operation state of a device, the influence of the pressure, or the like.

When the inner peripheral side ring 100a shifts to the side of a low-pressure space L relative to the outer peripheral side ring 100b (see FIG. 8), force in the floating direction (see white arrow) is applied to the outer peripheral side ring 100b by the action of the hydraulic pressure (arrows a, b). Then, both the reaction force and the friction of the seal surface 101 to an outer peripheral member 200 increase.

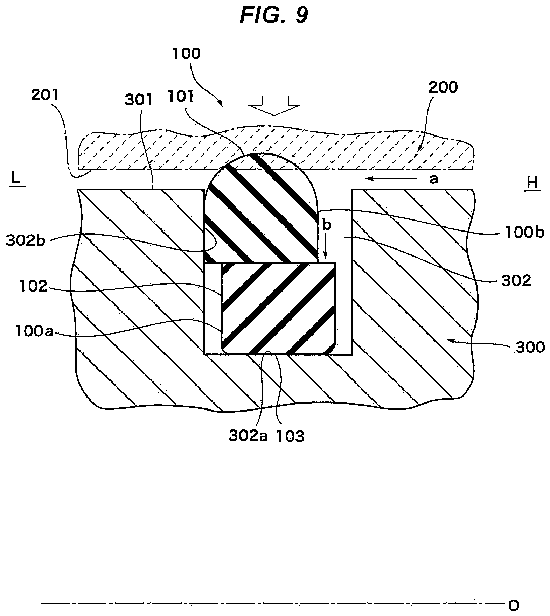

On the contrary, when the outer peripheral side ring 100b shifts to the side of a low-pressure space L relative to the inner peripheral side ring 100a (see FIG. 9), force in the pressing direction (see white arrow) to a groove bottom surface 302a is applied to the inner peripheral side ring 100a by the action of the hydraulic pressure (arrows a, b). Then, both the reaction force and the friction of the seal surface 101 to the outer peripheral member 200 decrease, so that the seal performance deteriorates.

As described above, when the positional shift in the axial direction occurs between the inner peripheral side ring 100a and the outer peripheral side ring 100b, a phenomenon in which the reaction force and the friction of the seal surface 101 to the outer peripheral member 200 are not stabilized occurs, and therefore an improvement has been demanded.

It is an object of the disclosure to prevent, in a seal ring in which two kinds of members different in the hardness are combined, a fluctuation in the reaction force and the friction of the seal surface to the mating surface accompanying the positional shift between the two kinds of members.

### Means for Solving the Problem

One aspect of the disclosure is provided with a ring having two members of an inner peripheral side ring which is a rubber-like elastic body closely contacting an inner peripheral member reciprocating relative to an outer peripheral member and an outer peripheral side ring which is a rubber-like elastic body disposed on the outer peripheral surface of the inner peripheral side ring to closely contact the outer peripheral member, a seating surface provided in one of the two members and seated in a mounting groove provided in either one of the inner peripheral member and the outer peripheral member, a seal surface provided in the other one of the two members having hardness higher than that of the one of the two members and closely contacting the other one of the inner peripheral member and the outer peripheral member, and a recess-projection fitting portion provided along the annular direction on the contact surface between the inner peripheral side ring and the outer peripheral side ring to restrict a positional shift in the axial direction between the inner peripheral side ring and the outer peripheral side ring.

Another aspect of the disclosure is provided with an inner peripheral side ring which is a rubber-like elastic body closely contacting an inner peripheral member reciprocating relative to an outer peripheral member, an outer peripheral side ring which is a rubber-like elastic body disposed on the outer peripheral surface of the inner peripheral side ring to closely contact the outer peripheral member and having hardness higher than that of the inner peripheral side ring, a seating surface provided in the inner peripheral side ring and seated in a mounting groove provided in the inner peripheral member, a seal surface provided in the outer peripheral side ring and closely contacting the outer peripheral member, and a recess-projection fitting portion provided along the annular direction on the contact surface between the inner peripheral side ring and the outer peripheral side ring to restrict a positional shift in the axial direction between the inner peripheral side ring and the outer peripheral side ring.

### Effect

The disclosure restricts the positional shift in the axial direction between the inner peripheral side ring and the outer peripheral side ring by the recess-projection fitting portion, and therefore can prevent a fluctuation in the reaction force and the friction of the seal surface to the mating surface accompanying the positional shift between the two kinds of members.

### Brief Description of Drawings

FIG. 1 is a figure illustrating an example of a seal ring of this embodiment, the left half of which is a cross-sectional view cut along the plane passing through an axial center O and the right half of which is a front view of the appearance.
FIG. 2 is a half cross-sectional view illustrating the mounting state of a reciprocating seal ring in the cross section cut along the plane passing through the axial center O.
FIG. 3 is a graph illustrating experimental results of the reaction force generated on the seal surface of various kinds of seal rings.
FIG. 4 is a graph illustrating experimental results of the friction generated on the seal surface of various kinds of seal rings.
FIG. 5 is a figure illustrating an example of a conventional seal ring, the left half of which is a cross-sectional view cut along the plane passing through an axial center O and the right half of which is a front view of the appearance.
FIG. 6 is a half cross-sectional view illustrating the mounting state of a reciprocating seal ring in the cross section cut along the plane passing through the axial center O.
FIG. 7 is a figure illustrating an example of a seal ring in which two kinds of members different in the hardness are combined as an example of the conventional seal ring, the left half of which is a cross-sectional view cut along the plane passing through an axial center O and the right half of which is a front view of the appearance.
FIG. 8 is a half cross-sectional view illustrating one aspect in which two kinds of members different in the hardness are shifted in the axial direction as the mounting state of the reciprocating seal ring illustrated in FIG. 7 in the cross section cut along the plane passing through the axial center O.
FIG. 9 is a half cross-sectional view illustrating another aspect in which the two kinds of members different in the hardness are shifted in the axial direction as the mounting state of the reciprocating seal ring illustrated in FIG. 7 in the cross section cut along the plane passing through the axial center O.

### Description of Embodiments

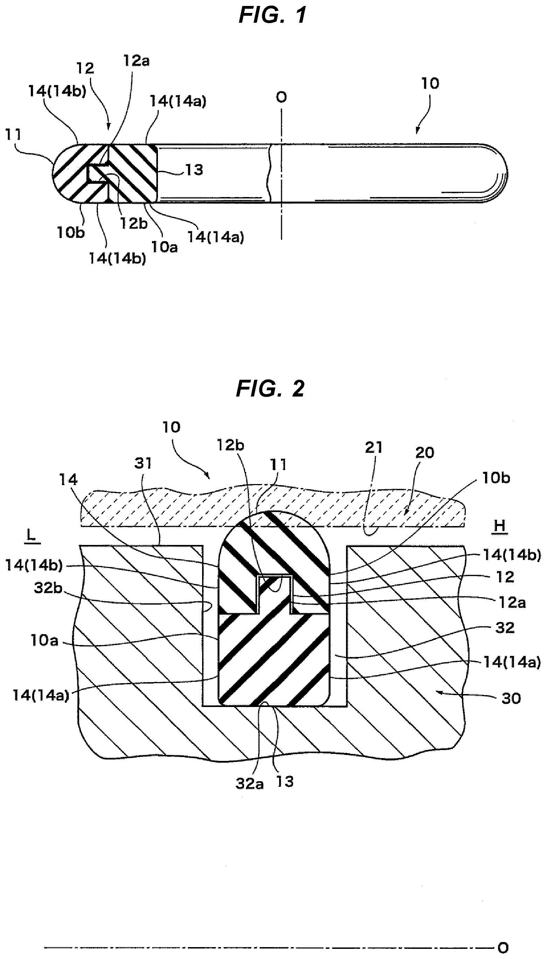

One embodiment is described based on FIG. 1 to FIG. 4. This embodiment is an example of a seal ring used in clutches used in the AT (Automatic Transmission) and the CVT (Continuously Variable Transmission) of automobiles.

As illustrated in FIG. 1, a seal ring 10 of this embodiment contains a rubber-like elastic material and the shape of the cross section cut along the plane passing through an axial center O has a flat D-shape (see the left half in FIG. 1). In the seal ring 10, two kinds of members different in the hardness are combined. One of the two members is an inner peripheral side ring 10a and the other one is an outer peripheral side ring 10b.

The inner peripheral side ring 10a is an annular member occupying the inner peripheral side of the seal ring 10 and is seated in a mounting groove 32 (see FIG. 2) of an inner peripheral member 30 described later. The outer peripheral side ring 10b is an annular member disposed on the outer peripheral surface of the inner peripheral side ring 10a and occupying the outer peripheral side of the seal ring 10 and brings a seal surface 11 into close contact with an inner peripheral surface 21 of an outer peripheral member 20 described later.

The inner peripheral side ring 10a of the two kinds of members is a low hardness portion containing a low hardness rubber material and the outer peripheral side ring 10b is a high hardness portion containing a high hardness rubber material. More specifically, the hardness of the side (outer peripheral side ring 10b) having the seal surface 11 of the inner peripheral side ring 10a and the outer peripheral side ring 10b is higher than the hardness of the side (inner peripheral side ring 10a) mounted and seated in the mounting groove 32.

Between the inner peripheral side ring 10a and the outer peripheral side ring 10b, a recess-projection fitting portion 12 is provided. The recess-projection fitting portion 12 is formed by a protrusion 12a provided along the annular direction in the outer peripheral surface of the inner peripheral side ring 10a and a recessed groove 12b provided along the annular direction in the inner peripheral surface of the outer peripheral side ring 10b. Both the protrusion 12a and the recessed groove 12b are provided in the entire periphery in the circumferential direction of the inner peripheral side ring 10a and the outer peripheral side ring 10b, respectively, and fitted to each other. Therefore, the recess-projection fitting portion 12 restricts a positional shift in the axial direction between the inner peripheral side ring 10a and the outer peripheral side ring 10b.

The inner peripheral surface of the inner peripheral side ring 10a is a seal inner peripheral surface 13 as a seating surface formed into a cylindrical shape. The seal surface 11 provided in the outer peripheral side ring 10b is provided with a circular arc-shaped cross section bulged to the outer diameter side. The inner peripheral side ring 10a and the outer peripheral side ring 10b have side surfaces 14 on both sides located on the plane orthogonal to the axial center O. A portion formed by the inner peripheral side ring 10a of the side surfaces 14 is a side surface 14a and a portion formed by the outer peripheral side ring 10b thereof is a side surface 14b.

Therefore, the seal ring 10 forms a "D-ring" shape as a whole.

As illustrated in FIG. 2, the seal ring 10 is interposed between an outer peripheral member 20 and an inner peripheral member 30 of a clutch (the entire of which is not illustrated), for example, to seal a fluid flowing between the outer peripheral member 20 and the inner peripheral member 30. As an example of the structure therefor, the seal ring 10 is mounted in the mounting groove 32 formed into an annular shape in an outer peripheral surface 31 of the inner peripheral member 30 with a gap and the seal surface 11 is projected to the outer diameter side from the mounting groove 32. The seal surface 11 closely contacts the inner peripheral surface 21 of the outer peripheral member 20 in a slidable manner.

The seal ring 10 is fitted into the mounting groove 32 to seat the seal inner peripheral surface 13 as the seating surface on a groove bottom surface 32a, and then receives the pressure of a hydraulic oil sealed to the side of a high-pressure space H to thereby bring the side surfaces 14 into close contact with an internal surface 32b of the mounting groove 32. The seal surface 11 forms a circular arc-shaped cross section to thereby locally increase the seal surface pressure to the inner peripheral surface 21 of the outer peripheral member 20 to prevent the leakage of the hydraulic oil to a low-pressure space L from the high-pressure space H.

In the seal ring 10 of this embodiment, two kinds of members different in the hardness are combined and the inner peripheral side ring 10a on the inner peripheral side is set as the low hardness portion and the outer peripheral side ring 10b on the outer peripheral side is set as the high hardness portion. Therefore, the sliding resistance when the seal ring 10 slides can be reduced without reducing the crushing margin of the outer peripheral side ring 10b having the seal surface 11 and without using a low hardness rubber material for the outer peripheral side ring 10b.

As described above based on FIG. 8 and FIG. 9, in a seal ring in which two kinds of members different in the hardness are combined, e.g., the seal ring 100 illustrated in FIG. 7, a positional shift occurs between the inner peripheral side ring 100a and the outer peripheral side ring 100b in some cases. At this time, when the inner peripheral side ring 100a shifts to the low-pressure space L side relative to the outer peripheral side ring 100b (see FIG. 8), the force in the floating direction is applied to the outer peripheral side ring 100b. On the contrary, when the outer peripheral side ring 100b shifts to the low-pressure space L side relative to the inner peripheral side ring 100a (see FIG. 9), the force in the pressing direction (see white arrow) to the groove bottom surface 302a is applied to the inner peripheral side ring 100a. Therefore, the stability of the reaction force and the friction of the seal surface 101 to the outer peripheral member 200 is impaired.

In the seal ring 10 of this embodiment, the recess-projection fitting portion 12 restricts the positional shift between the inner peripheral side ring 10a and the outer peripheral side ring 10b, and therefore the positional shift between the inner peripheral side ring 10a and the outer peripheral side ring 10b can be avoided. As a result, a fluctuation in the reaction force and the friction of the seal surface 11 to the outer peripheral member 20 occurring accompanying the floating of the outer peripheral side ring 10b which is illustrated in FIG. 8 as an example or the pressing to the inner peripheral side ring 10a illustrated in FIG. 9 as an example can be avoided and the stability of the sliding resistance when the seal ring 10 slides can be maintained.

The seal ring 10 of this embodiment is provided with the inner peripheral side ring 10a which is a rubber-like elastic body closely contacting the inner peripheral member 30 reciprocating relative to the outer peripheral member 20 and the outer peripheral side ring 10b which is a rubber-like elastic body disposed on the outer peripheral surface 31 of the inner peripheral side ring 10a to closely contact the outer peripheral member 20 and having hardness higher than that of the inner peripheral side ring 10a. The inner peripheral side ring 10a is provided with the seal inner peripheral surface 13 as the seating surface seated in the mounting groove 32 provided in the inner peripheral member 30. The outer peripheral side ring 10b is provided with the seal surface 11 closely contacting the outer peripheral member 20. The seal ring 10 is provided with the recess-projection fitting portion 12 provided along the annular direction on the contact surface between the inner peripheral side ring 10a and the outer peripheral side ring 10b and restricting the positional shift in the axial direction between the inner peripheral side ring 10a and the outer peripheral side ring 10b.

As another embodiment, the mounting groove 32 may be provided in the outer peripheral member 20. In this case, the seating surface seated in the mounting groove 32 is provided in the outer peripheral surface of the outer peripheral side ring 10b and the seal surface 11 is provided on the inner peripheral surface of the inner peripheral side ring 10a.

As still another embodiment, the recessed groove 12b of the recess-projection fitting portion 12 is provided in the inner peripheral side ring 10a and the protrusion 12a may be provided in the outer peripheral side ring 10b.

In the implementation of the disclosure, various kinds of modifications and alternations are permitted.

### Examples

In order to compare the reaction forces to the seal surface 11, the analysis by the finite element method (FEM) was conducted supposing models of six kinds of seal rings 10. All the models contain an acrylic rubber having a product inner diameter φ of 50.5 and a crushing margin of 0.2 mm. Each specification is as follows.
(Model 1)
   A single raw material in which the size of a part of the cross-sectional shape is 1.7 × 3.4 (mm) and the hardness is 60.
(Model 2)
   A single raw material in which the size of a part of the cross-sectional shape is 1.7 × 3.4 (mm) and the hardness is 70.
(Model 3)
   A single raw material in which the size of a part of the cross-sectional shape is 1.7 × 3.4 (mm) and the hardness is 90.
(Model 4)
   An inner peripheral side ring has a size of a part of the cross-sectional shape of 1.7 × 1.7 (mm) and a hardness of 60.
   An outer peripheral side ring has a size of a part of the cross-sectional shape of 1.7 × 1.7 (mm) and a hardness of 90.
(Model 5)
   An inner peripheral side ring has a size of a part of the cross-sectional shape of 1.7 × 1.1 (mm) and a hardness of 60.
   An outer peripheral side ring has a size of a part of the cross-sectional shape of 1.7 × 2.3 (mm) and a hardness of 90.
(Model 6)
   An inner peripheral side ring has a size of a part of the cross-sectional shape of 1.7 × 2.3 (mm) and a hardness of 60.
   An outer peripheral side ring has a size of a part of the cross-sectional shape of 1.7 × 1.1 (mm) and a hardness of 90.

FIG. 3 illustrates the analysis results of the reaction forces generated on the seal surface 11 when the pressure applied by a fluid sealed between the outer peripheral member 20 and the inner peripheral member 30 is 0 MPa and when the pressure by the fluid is 2 MPa.

With respect to the single raw material models (Models 1 to 3), it was found that, while there are no great differences in the reaction force between the model 1 having a hardness of 60 and the model 2 having a hardness of 70 also when the pressure by the fluid is 0 MPa and also when the pressure by the fluid is 2 MPa, the reaction force greately increases in the model 3 having a hardness of 90.

With respect to the models (Models 4 to 6) in which two kinds of members different in the hardness are combined, although the hardness of the outer peripheral side ring 10b is set to 90, the reaction force drastically decreases in all the models 4 to 6 as compared with that of the model 3 containing the single raw material having a hardness of 90. The reduction rate of the reaction force becomes larger in the order of the models 5, 4, and 6 also when the pressure by the fluid is 2 MPa and also when the pressure by the fluid is 0 MPa. More specifically, the reaction force decreases as the dimension ratio of the inner peripheral side ring 10a using a low hardness rubber material is larger.

With respect to the models (Models 4 to 6) in which two kinds of members different in the hardness are combined, the reaction force decreases when the pressure by the fluid is 2 MPa even when compared with that of the model 1 containing the single raw material having a hardness of 60 and the model 2 containing the single raw material having a hardness of 70. More specifically, it is found in the models 4 to 6 that a difference in the reaction force to a fluctuation in the pressure of the fluid becomes small.

The analysis results above clarify that the models (Models 4 to 6) in which two kinds of members different in the hardness are combined can reduce the reaction force to the seal surface 11 as compared with that of the single raw material models (Models 1 to 3), although the crushing margins are the same and 0.2 mm.

Next, in order to compare the friction generated in the seal surface 11, the analysis by the finite element method (FEM) was conducted supposing models of three kinds of seal rings 10. All the models contain an acrylic rubber having a product inner diameter φ of 50.5 and a crushing margin of 0.2 mm. Each specification is as follows.
(Model 7)
   A single raw material in which the size of a part of the cross-sectional shape is 1.7 × 3.4 (mm) and the hardness is 70.
(Model 8)
   An inner peripheral side ring has a size of a part of the cross-sectional shape of 1.7 × 2.3 (mm) and a hardness of 60.
   An outer peripheral side ring has a size of a part of the cross-sectional shape of 1.7 × 1.1 (mm) and a hardness of 90.
(Model 9)
   An inner peripheral side ring has a size of a part of the cross-sectional shape of 1.7 × 2.3 (mm) and a hardness of 60.
   An outer peripheral side ring has a size of a part of the cross-sectional shape of 1.7 × 1.1 (mm) and a hardness of 90.

A recess-projection fitting portion is provided between the inner peripheral side ring and the outer peripheral side ring.

FIG. 4 illustrates the analysis results of the friction generated in the seal surface 11 when the pressure applied by a fluid sealed between the outer peripheral member 20 and the inner peripheral member 30 is 0 MPa and when the pressure is 2 MPa.

When the pressure applied by the fluid is 0 MPa, a difference is hard to arise in values of the friction generated in the seal surface 11 in all the models 7 to 9.

When the pressure applied by the fluid is 2 MPa, the friction sharply increases in the model 8. This is because the phenomenon illustrated in FIG. 8 as an example occurs, i.e., a phenomenon in which, when the positional shift occurs between the inner peripheral side ring and the outer peripheral side ring due to the operation state of a device in which the seal ring is used or the influence of pressure, so that the inner peripheral side ring shifts to the low-pressure space side relative to the outer peripheral side ring, force is applied to the outer peripheral side ring in a direction of floating from the inner peripheral side ring due to the action of the hydraulic pressure occurs. Thus, the friction of the seal surface to the outer peripheral member increases.

In this point, when focusing on the model 9, the friction generated in the seal surface 11 is markedly low as compared with that of the model 8 although the model 9 is a seal ring in which two kinds of members different in the hardness are combined as with the model 8. This is considered to be because the recess-projection fitting portion is interposed between the inner peripheral side ring and the outer peripheral side ring, and therefore the inner peripheral side ring and the outer peripheral side ring do not cause the positional shift in the axial direction. More specifically, the phenomenon illustrated in FIG. 8 does not occur in the first place, and therefore the outer peripheral side ring does not float.

With respect to the model 9, the friction generated in the seal surface 11 is low even when compared with that of the model 7 containing the single raw material. This is considered to be because the hardness (= 60) of the inner peripheral side ring is lower than the hardness (= 70) of the model 7.

The analysis results above verify the superiority of the model 9 with respect to the friction generated in the seal surface 11.

### Description of Reference Numerals

- 10: seal ring
- 10a: inner peripheral side ring
- 10b: outer peripheral side ring
- 11: sealing surface
- 12: recess-projection fitting portion
- 12a: protrusion
- 12b: recessed groove
- 13: seal inner peripheral surface (seating surface)
- 14: side surface
- 14a: side surface
- 14b: side surface
- 20: outer peripheral member
- 21: inner peripheral surface
- 30: inner peripheral member
- 31: outer peripheral surface
- 32: mounting groove

## Claims

1. A seal ring comprising:
a ring having two members of an inner peripheral side ring which is a rubber-like elastic body closely contacting an inner peripheral member reciprocating relative to an outer peripheral member and an outer peripheral side ring which is a rubber-like elastic body disposed on an outer peripheral surface of the inner peripheral side ring to closely contact the outer peripheral member;
a seating surface provided in one of the two members and seated in a mounting groove provided in either one of the inner peripheral member and the outer peripheral member;
a seal surface provided in another one of the two members having hardness higher than hardness of the one of the two members and closely contacting another one of the inner peripheral member or the outer peripheral member; and
a recess-projection fitting portion provided along an annular direction on a contact surface between the inner peripheral side ring and the outer peripheral side ring to restrict a positional shift in an axial direction between the inner peripheral side ring and the outer peripheral side ring.

2. The seal ring according to Claim 1, wherein
the recess-projection fitting portion includes a protrusion provided along the annular direction in either one of the inner peripheral side ring and the outer peripheral side ring and a recessed groove provided along the annular direction in another one of the inner peripheral side ring and the outer peripheral side ring into which the protrusion is fitted.

3. A seal ring comprising:
an inner peripheral side ring which is a rubber-like elastic body closely contacting an inner peripheral member reciprocating relative to an outer peripheral member;
an outer peripheral side ring which is a rubber-like elastic body disposed on the outer peripheral surface of the inner peripheral side ring to closely contact the outer peripheral member and having hardness higher than hardness of the inner peripheral side ring;
a seating surface provided in the inner peripheral side ring and seated in a mounting groove provided in the inner peripheral member;
a seal surface provided in the outer peripheral side ring and closely contacting the outer peripheral member; and
a recess-projection fitting portion provided along an annular direction on a contact surface between the inner peripheral side ring and the outer peripheral side ring to restrict a positional shift in an axial direction between the inner peripheral side ring and the outer peripheral side ring.

4. The seal ring according to Claim 3, wherein
the recess-projection fitting portion includes a protrusion provided along the annular direction in the inner peripheral side ring and a recessed groove provided along the annular direction in the outer peripheral side ring into which the protrusion is fitted.
